# FASCICULE DE BREVET EUROPEEN

(11) **EP 3 338 046 B1**
(45) Date de publication et mention de la délivrance du brevet: **02.04.2025**
(21) Numéro de dépôt: 16770047.5
(22) Date de dépôt: 19.08.2016
(51) Int. Cl.: F28D 20/02

(54) **ENSEMBLE**
ANORDNUNG
ASSEMBLY

(30) Priorité: 20.08.2015 FR 1557835
(43) Date de publication de la demande: 27.06.2018
(73) Titulaire: Hutchinson, 75008 Paris (FR)
(72) Inventeur: CHOPARD, Fabrice, 75008 Paris (FR); BLINE, Paul, 75008 Paris (FR); HUILLET, Cédric, 75008 Paris (FR); CHAUVET, Boris, 75008 Paris (FR); POUPA, Nadine, 75008 Paris (FR); DOMINIAK, Christophe, 75008 Paris (FR)
(74) Mandataire: Ernest Gutmann - Yves Plasseraud S.A.S.
(86) Numéro de dépôt international: PCT/FR2016/052098
(87) Numéro de publication internationale: WO 2017/029461

(56) Documents cités:
- EP-A1- 0 302 273
- GB-A- 2 455 748
- JP-A- 2006 183 943
- JP-A- 2010 084 813
- JP-A- H0 791 594
- US-A1- 2012 231 204

## Description

La présente invention concerne en particulier, pour une isolation thermique, un ensemble comprenant au moins et au moins un second matériau isolant thermique au sein d'un panneau (à constitution) PIV (panneau isolant sous vide ; VIP en anglais).

Un matériau MCP (matériau à changement de phase) peut aussi être contenu dans la structure sous vide (PIV). A toute fin, il est précisé qu'un matériau MCP désigne un matériau capable de changer d'état physique dans une plage de température restreinte. Le transfert de chaleur (ou transfert thermique) peut s'opérer par utilisation de sa Chaleur Latente (CL) : le matériau peut alors stocker ou céder de l'énergie par simple changement d'état, tout en conservant une température sensiblement constante, celle du changement d'état.

Quant aux panneaux PIV, ce sont des isolants thermiques où un noyau isolant, typiquement en matériau poreux par exemple un gel/une poudre de silice pressé en plaque est, entouré, sous vide d'air, d'une feuille enveloppante étanche aux gaz, par exemple en matière plastique et/ou en aluminium laminé. Le vide obtenu, d'une pression résiduelle typiquement comprise entre 10⁻³et 10⁴ Pa, peut permettre d'abaisser la conductivité thermique à 0,02, voire moins de 0,01 W/(m·K) environ dans les conditions d'utilisation. On peut obtenir ainsi une efficacité d'isolation 3 à 10 fois supérieure à celle de matériaux isolants plus classiques.

Sous « vide d'air» couvrira le cas de structures sous « atmosphère contrôlée » où le volume concerné sera rempli par un gaz ayant une conductivité thermique inférieure à celle de l'air ambiant, 26mW/m.K avec donc un effet comparable à celui d'un certain vide d'air. La porosité des isolants thermiques n'est plus indispensable.

« Poreux » désignera un matériau possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ont des tailles inférieures à 1 ou 2mm de façon à pouvoir garantir une bonne isolation thermique, et de préférence à 1micron, et préférentiellement encore à 10⁻⁹m (structure nanoporeuse), pour des questions en particulier de tenue au vieillissement et donc de possible dépression moins forte dans l'enveloppe PIV.

Par ailleurs, l'industrie est invitée à accélérer la mise sur le marché de nouvelles technologies pouvant réduire les émissions de polluants, lisser d'éventuelles augmentations ponctuelles de charges par rapport à un fonctionnement nominal dimensionnant, mais aussi proposer des solutions pour décaler dans le temps la restitution d'une énergie disponible à un autre moment.

Or, ni les matériaux MCP ni les panneaux PIV seuls ne semblent pouvoir répondre aux attentes du marché.

Leurs mises en œuvre sur le terrain est un problème, en particulier leur conditionnement, malgré EP0302273A1 auquel se réfère le préambule de la revendication 1. Le document JP H07 91594 montre les caractéristiques de la deuxième partie de la revendication 1.

C'est dans ce contexte qu'est ici proposé un ensemble comprenant les caractéristiques de la revendication 1.

Dans une telle solution à excroissances ou entretoises de maintien, il est proposé que ces excroissances soient maintenues vis-à-vis de la paroi périphérique par des coopérations de formes entre elles, ce qui facilitera fabrication en série et montage, voire démontage pour maintenance.

Le terme « manchon » couvre tant les structures ouvertes à au moins une extrémité, comme celui repéré 38 ci-après, que les structures formant boîtier, par exemple en deux demi-coquilles complémentaires.

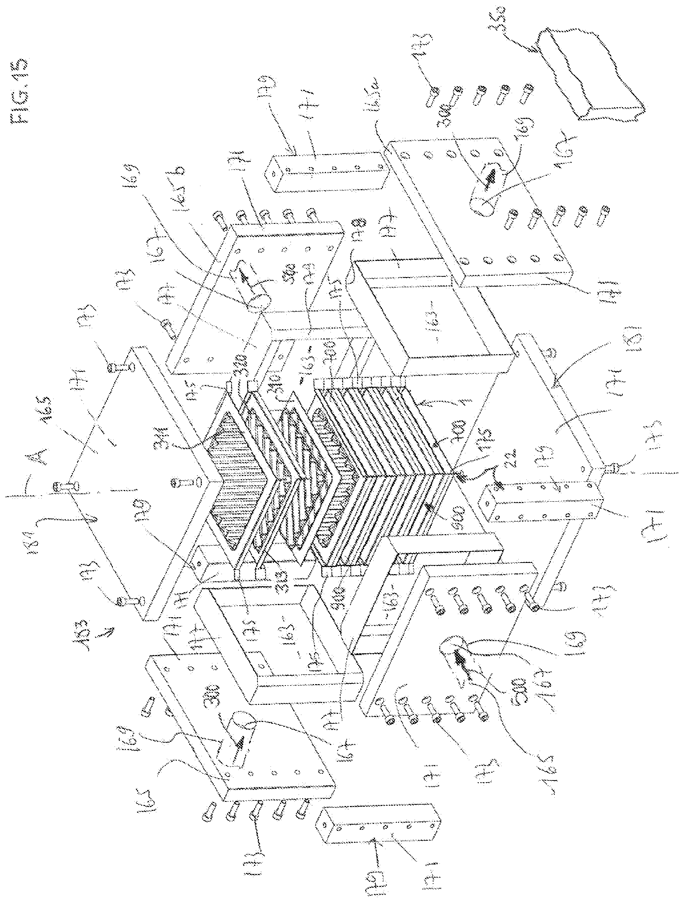

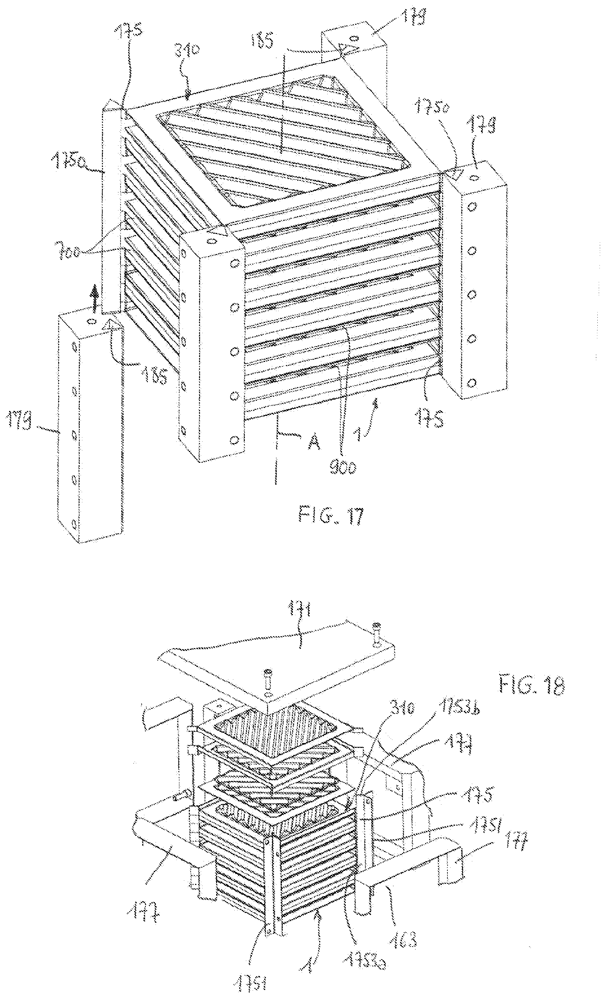

En particulier en liaison avec l'utilisation d'un dit fluide circulant dans un stockeur-échangeur contenu dans les limites d'une dite paroi périphérique et réalisé avec une série de modules globalement plans empilés en strates (figure 15 ou 17 ci-après), il est proposé que les excroissances ou entretoises soient définies par des pattes saillantes de la paroi périphérique engagées avec des blocs à isolant(s) thermique(s).

Ainsi, il suffira par exemple de vriller en torsades des coins de plaques pour réaliser aisément de telles pattes saillantes prêtes à s'engager dans des fentes des blocs qui pourront former des piliers structuraux.

En complément ou alternative, il est proposé que les excroissances ou entretoises soient définies toujours par des blocs à isolant(s) thermique(s), mais engagés soit avec certaines au moins desdites structures isolantes sous vide d'air, soit avec des entretoises.

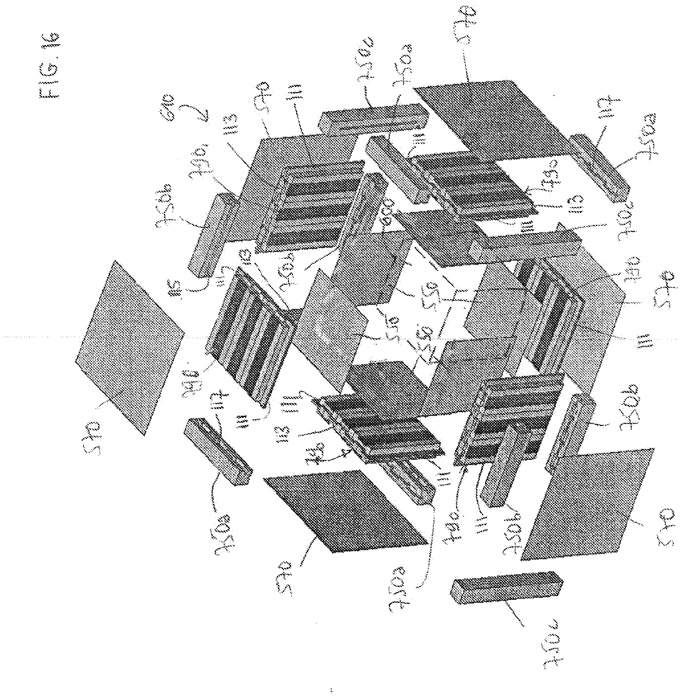

En effet, on pourra alors (comme par exemple dans la solution figure 16 ci-après) réaliser lesdites structures isolantes sous vide d'air sous la forme de briques imbriquées présentant des excroissances où engager, par coopération de formes, des fentes de blocs à isolant(s) thermique(s) qui pourront là encore former des piliers structuraux

De préférence, les excroissances, ou entretoises renfermeront un matériau isolant thermique.

Et pour encore faciliter fabrication en série et montage, voire démontage pour maintenance, il est proposé que les corps présentent des angles et que les excroissances ou entretoises de maintien se présentent comme des baguettes en tronçons s'étendant dans les angles et, comme le manchon, le long de plusieurs corps de modules successifs empilés (exemples figure 15 ou 17 ci-après).

Une limite de la solution ci-avant à excroissances ou entretoises et poches isolantes glissées entre deux telles excroissances ou entretoises est la discontinuité créée.

Aussi est-il proposé, non conforme à l'invention revendiquée, un ensemble comprenant :
- au moins une structure pourvue d'une paroi périphérique et présentant au moins un volume intérieur où est présent l'un au moins parmi :
   -- un fluide frigorigène ou caloporteur pouvant circuler dans le ou lesdits volumes sous l'action de moyens de circulation,
   -- des éléments de stockage et de restitution d'une énergie thermique,
   -- au moins un élément à maintenir à une certaine température, et/ou
   -- au moins un élément dégageant de la chaleur,
- une série de poches fermées à constitution PIV (sous vide d'air) :
   -- contenant individuellement au moins un élément isolant thermique,
   -- s'étendant autour de ladite paroi extérieure, et
   -- réunies par des portions intermédiaires où deux poches successives peuvent s'articuler l'une par rapport à l'autre, et
- un manchon s'étendant autour de ladite série de poches, de façon à maintenir les poches entre le manchon et ladite paroi périphérique.

Si une telle solution à enveloppe extérieure continue est retenue, il est en outre proposé, pour combiner un positionnement pratique de cette enveloppe et une optimisation de son isolation thermique, en limitant les ponts thermiques:
- que certaines au moins des portions intermédiaires d'articulation comprennent :
   -- une partie tubulaire (section circulaire ou pas) définie par un enroulement thermiquement isolant ou par une unité renfermant un matériau thermiquement isolant poreux dans une enceinte tubulaire sous vide, et
   -- deux parties de feuilles flexibles (ou déformables), chacune interposée entre ladite partie tubulaire et une dite poche,
- et que la paroi périphérique présente extérieurement des étriers où sont disposées lesdites parties tubulaires.

Concernant maintenant les destinations des réalisations qui précèdent, une est en particulier détaillée ci-après, comme exemple privilégié, le but étant d'en favoriser la performance, dans un contexte de fabrication industrielle en série.

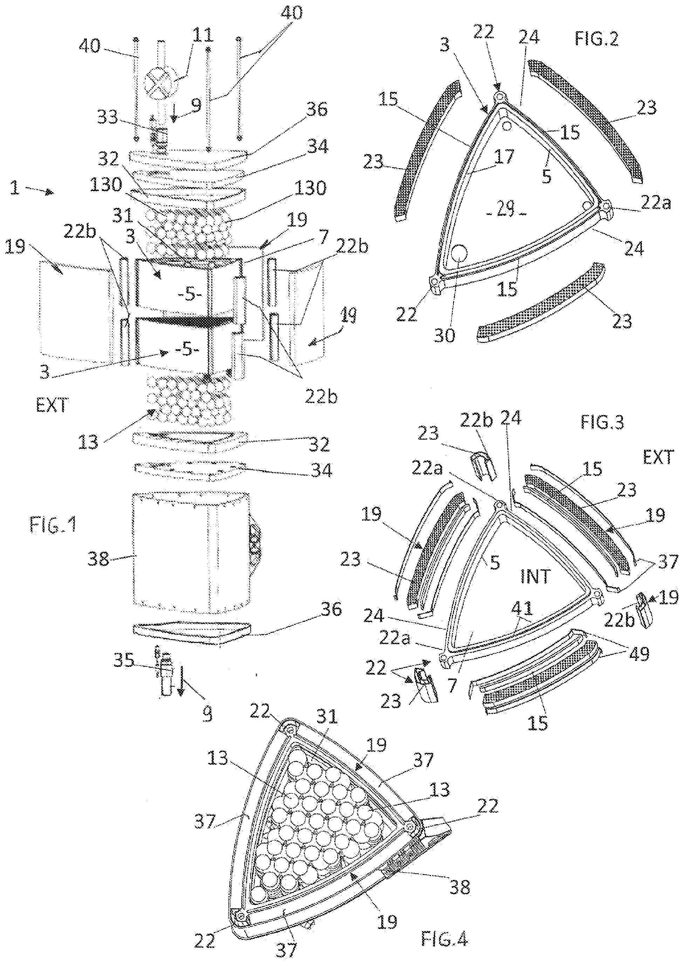

Ainsi est-il proposé la réalisation d'une unité de stockage et de restitution ultérieure d'une énergie thermique suivant notamment l'une des réalisations des figures 1, 15 et suivantes

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :
- la figure 1 est un schéma d'unité de type stockeur-échangeur d'énergie thermique, en vue éclaté ;
- la figure 2 montre, en vue éclaté, l'un de ses modules entouré de blocs isolants thermiques non encore enveloppés ;
- les figures 3 (vue encore en éclaté) et 4 (état final assemblé) complètent la figure 2 ;
- la figure 5 montre une réalisation alternative des poches périphériques, à la manière d'un panneau articulable continu ;
- la figure 6 schématise une coopération par étriers de positionnement entre une paroi périphérique à isoler et des poches isolantes périphériques ;
- la figure 7 schématise un état fermé d'un panneau articulable à isolation continue ;
- les figures 8,9 schématisent, en vue locale (à prolonger de part et d'autre dans le cas d'un panneau articulable) deux structures possibles de poches isolantes ;
- les figures 10 à 13 schématisent, suivant des bandes partielles plus ou moins longues des alternatives de réalisation desdites poches, avec ici des portions intermédiaires d'articulation,
- par des vues éclatées successives terminées à droite par la version assemblée, la figure 14 schématise le conditionnement latéral extérieur d'un élément central qui peut être un échangeur thermique,
- et, les figures 15 et suivantes (16-18) sont des alternatives à la solution de la figure 1, toujours en vue éclatée.

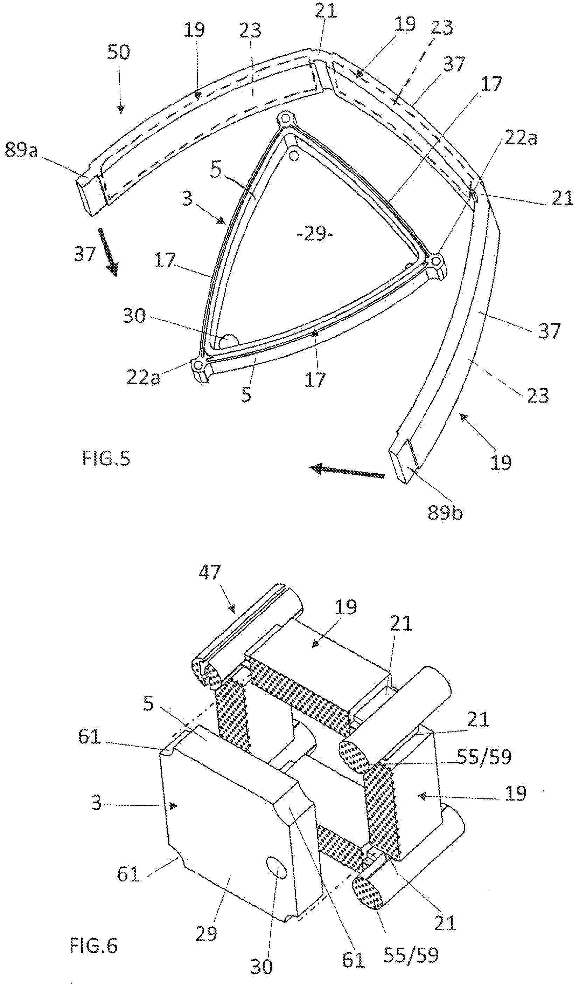

Il est précisé que les modes de réalisation montrés dans les figures 5 à 18 ne font pas partie de l'invention telle que définie par la revendication 1.

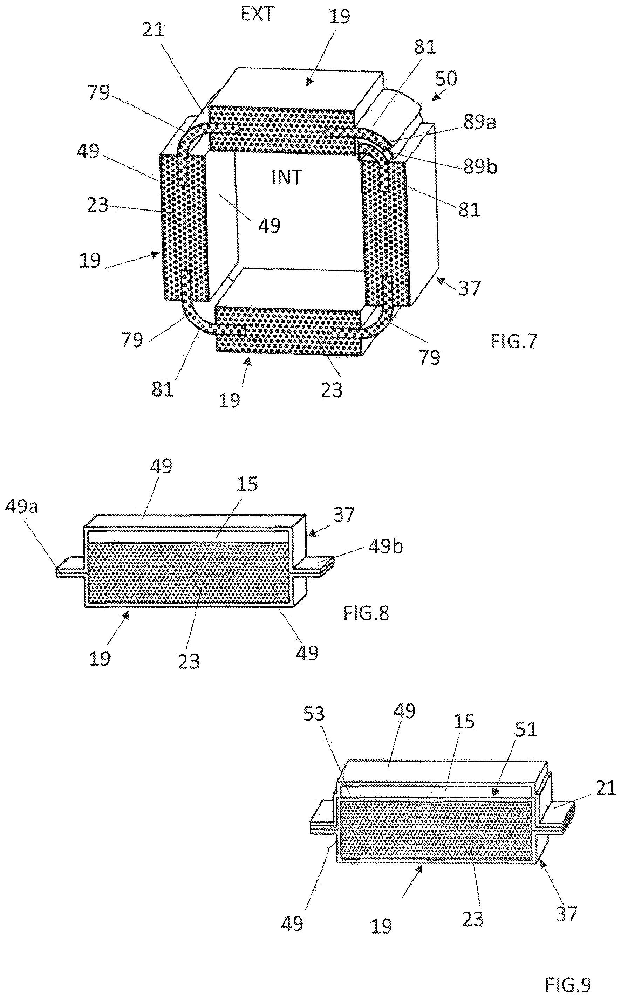

Bien que d'autres applications soient envisageables (échangeur liquide/liquide, évaporateur, condenseur par exemple), les schémas des figures 1, 4-6 montrent ensemble une unité de type stockeur-échangeur d'énergie thermique 1 qui comprend :
- au moins une, ici plusieurs structures 3, chacune pourvue d'une paroi périphérique 5 et d'un fond 29, et présentant un volume intérieur 7 où est ici présent un fluide 9 frigorigène ou caloporteur pouvant circuler dans lesdits volumes sous l'action de moyens 11 de circulation, et des éléments 13 de stockage et de restitution d'une énergie thermique,
- au moins une couche 15 contenant un matériau MCP qui peut être disposée dans la paroi périphérique 5 (par exemple dans au moins une cavité périphérique 17 de cette paroi, comme montré figure 2 ou 5) ou autour de ladite paroi périphérique, en particulier dans la ou les enveloppe 37 des figures 8,9 notamment,
- des éléments 19 à matériau thermiquement isolant 23 et à constitution PIV (sous vide d'air) disposés autour de la couche 15 et s'étendant autour de la paroi périphérique 5,
- des excroissances formant des entretoises, 22, de maintien fixées avec la/les parois périphériques 5, deux excroissances délimitant entre elles, latéralement et autour de la paroi périphérique, un espace 24 ouvert où est disposé l'un au moins des éléments 19 isolants thermiques à constitution PIV,
- et un manchon ou fourreau 38 de protection mécanique ouvert aux deux extrémités, par exemple en plastique dur, qui enveloppe les modules 3, les pièces 32,34,36 et les poches 19, lesquelles sont donc interposées entre les parois 5 et ce fourreau.

La paroi périphérique 5 sépare donc de l'environnement extérieur (EXT) le volume 7 qu'elle entoure latéralement, c'est-à-dire transversalement à la direction (ici 27) suivant laquelle les modules 3 sont alignés ou superposés.

S'étendant autour des excroissances 22 et des éléments isolants thermiques à constitution PIV 19, le manchon 38 participe au maintien des éléments 19 dans les espaces 24, comme montré figure 4.

Par « constitution PIV », on entend une structure sous vide d'air partiel (donc une enveloppe étanche à l'air) contenant au moins un matériau isolant thermique, qui pourrait être microporeux (tailles de pores inférieures à 1microns), voire nanoporeux (tailles de pores inférieures à 10⁻⁹m).

Les éléments 19 se présenteront favorablement comme des poches.

Les excroissances de maintien 22 pourront être en plusieurs parties. Ainsi voit-on figures 1-4 une solution où elles sont en deux parties 22a,22b. La partie 22b est amovible et peut se fixer, par des coopérations de formes entre elles, avec la partie 22a qui est monobloc avec la paroi périphérique 5, en périphérie extérieure de celle-ci. Les parties amovibles 22b peuvent chacune se présenter comme un clip ou un embout à engager par déformation élastique forcée, ou par coulissement latéral, autour de la partie fixe 22a. Ces parties de maintien 22b peuvent être thermiquement isolantes et renfermer pour cela une couche 23 en matériau isolant thermique (qui peut donc être à constitution PIV, comme une poche 19).

Typiquement, les modules ou structures 3 présenteront des angles et les excroissances de maintien 22 se présenteront comme des baguettes s'étendant dans les angles, comme illustré.

A l'inverse de ce qui précède, plutôt que d'être donc creuse comme un clip, la partie amovible 22b pourrait présenter une saillie vers un creux extérieur de la partie fixe 22a pour coopérer avec. Autre possibilité : les deux parties 22a,22b n'en formerait qu'une pour définir une excroissance monobloc avec la paroi 5, de sorte à définir un espace 24 entre deux telles excroissances monoblocs périphériquement successives.

Les parois périphériques 5 et fonds des modules ou structures 3 a priori monoblocs pourront notamment être en élastomère, en matériau polymère plus rigide (polyéthylène moyenne ou haute densité, par exemple), ou en composite (chargée de fibres), voire en métal.

Des passages 30 communiquant au moins deux à deux, dans les fonds 29, permettent au fluide 9 (qui peut être de l'eau ou de l'huile, voire un gaz, tel de l'air), de circuler, depuis une entrée 33 jusqu'à une sortie 35, entre les modules ou structures 3.

Là où cela est nécessaire, dès lors que les structures ouvertes 3 peuvent être disposées notamment dos à dos (figure 1) ou au contraire face à face, un ou plusieurs couvercles 32, ici deux doubles, ferment les ouvertures 31, de façon à étancher chaque volume 7. Extérieurement, chaque couvercle 32 peut être doublé par une poche unique 34 à constitution PIV. Et une plaque 36 de protection mécanique peut fermer le tout, suivant l'axe 27, comme illustré. Les entrée 33 et sortie 35 traversent les pièces 32,34,36 pour déboucher dans les volumes 7 respectifs, comme montré figure 1. Et un fourreau 38 de protection mécanique ouvert aux deux extrémités, par exemple en plastique dur, enveloppe les modules 3, les pièces 32,34,36 et les poches 19 qui sont donc interposées entre les parois 5 et ce fourreau.

Dans l'exemple de la figure 1, la solution consiste en deux structures 3, empilées suivant l'axe 27 qui est perpendiculaire à leurs fonds respectifs 29, lesquels ferment les structures, transversalement à la paroi périphérique 5 et axialement à l'opposé d'une ouverture 31.

Des moyens de fixation 40, tels des tirants axiaux, seront de préférence prévus pour venir en prise avec les modules ou structures 3 afin d'assurer une fixation entre ces corps placés en contact et en regard. Après cela, le manchon 38 sera extérieurement mise en place. Pour l'étanchéité vis-à-vis du fluide 9 passant entre les corps, un joint 41 (figure 3 par exemple) sera de préférence prévu autour de chaque volume 7 et interposé entre deux corps de module. Une alternative serait par exemple de coller ensemble les corps de modules.

Ainsi, l'ensemble 1 est, dans l'exemple, de construction modulaire, ce qui doit permettre de limiter le poids et/ou le volume global de l'ensemble.

Par ailleurs la performance thermique des matériaux MCP est reconnue. Et un complexe local MCP/isolant thermique, de préférence sous constitution PIV, permettra d'associer :
- une isolation thermique entre modules,
- et une capacité de lissage des variations de température du fluide 9 passant dans le stockeur-échangeur 1 et/ou (via le matériau MCP) des éléments présents dans le volume interne du module considéré.

Le matériau thermiquement isolant 23 de chaque poche 19 isolante thermique de préférence à constitution PIV ne sera pas un matériau MCP, mais un isolant tel qu'une laine de verre, une mousse de polyuréthane ou de polyisocyanurate, ou encore plus favorablement un matériau thermiquement isolant poreux, tel qu'une silice nano-poreuse, disposé dans une enceinte sous vide, pour définir donc au moins un tel panneau isolant sous vide, PIV.

Dans l'exemple de la figure 1, le (ici chaque) volume intérieur 7 contient donc des éléments 13 de stockage et de restitution ultérieure d'une énergie thermique avec lesquels le fluide frigorigène ou caloporteur 9 vient en échange thermique.

En tant que constitution des éléments 13 (ou 15 ou 81 ci-après), on pourra prévoir une composition de caoutchouc telle que décrite dans EP2690137 ou dans EP2690141, à savoir dans le second cas une composition réticulée à base d'au moins un élastomère silicone « RTV » vulcanisé à température ambiante et comprenant au moins un matériau à changement de phase (MCP), ledit au moins un élastomère silicone présentant une viscosité mesurée à 23°C selon la norme ISO 3219 qui est inférieure ou égale à 5000 mPa.s.

Dans cette composition, la matrice élastomère sera majoritairement constituée (i.e. selon une quantité supérieure à 50 pce, de préférence supérieure à 75 pce) d'un ou de plusieurs élastomères silicones « RTV ». Ainsi, cette composition pourra avoir sa matrice élastomère comprenant un ou plusieurs élastomères silicones selon une quantité totale supérieure à 50 pce et optionnellement un ou plusieurs autres élastomères (i.e. autres que des silicones « RTV ») selon une quantité totale inférieure à 50 pce. Le matériau à changement de phase (MCP) thermique est constitué de n-hexadécane, d'eicosane ou d'un sel de lithium, tous présentant des points de fusion inférieurs à 40° C.

Le matériau MCP des éléments cités pourrait être à base d'acide gras, de paraffine, ou de sel eutectique ou hydraté. D'autres possibilités existent, comme un MCP imprégné dans un réseau poreux.

A priori les éléments 13, ici individualisés, telles les billes ou sphères évoquées, seront disposés en vrac dans les volumes 7. Le rapport taille des structures individualisées / dimensions de chaque sous-volumes sera alors défini en conséquence, afin de préférence d'optimiser les surfaces d'échange éléments 13/fluide 9.

Figures 1,4-6, les poches isolantes périphériques 19 se succèdent donc de façon discontinue autour d'une paroi 5. Mais une réalisation continue est aussi prévue, comme par exemple figure 5 où les poches isolantes 19 sont liées deux à deux par des portions intermédiaires flexibles 21 où deux poches successives peuvent s'articuler l'une par rapport à l'autre.

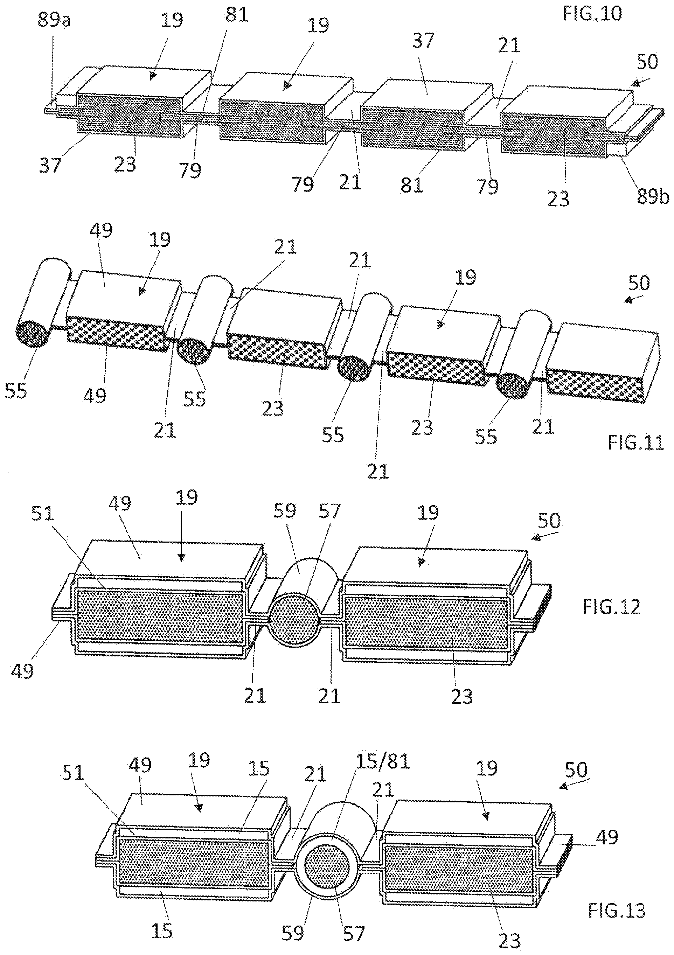

Bien que ceci ne soit pas strictement imposé (une forme fermée sur elle-même, comme un manchon 47 étant possible, comme se pourrait être le cas figure 6), il sera a priori préféré, si les poches 19 sont continument réunies, que celles-ci définissent ensemble, un panneau articulable 50, comme figures 5,7 et 10-13, pouvant :
- typiquement dans un état opérationnel, être fermé sur lui-même (voir figure 7, où la structure 50 est à imaginer à disposer ainsi autour d'une paroi 5 à isoler),
- et être déployé sensiblement à plat, par exemple pour être stocké et dans un état qui peut être non opérationnel (voir figures 10,11).

Indépendamment d'une réalisation discontinue ou non des poches 19, ce qui suit présente maintenant, en référence aux figures 8,9 une réalisation favorable de ces poches et des portions intermédiaires 21 si elles existent. Ainsi, même si seule une poche 19 est montrée, il suffit de reproduire le modèle ensuite de part et d'autre pour continuer la structure, si souhaité.

On peut constater que, dans ces réalisations privilégiées, chaque poche 19 à constitution PIV comprendra (comme on le retrouve en vue éclaté figure 3) :
- au moins un premier élément, ou une première couche, 15 contenant le matériau MCP, à côté (opérationnellement à l'extérieur) duquel est disposé un second élément constitué dudit matériau isolant thermique 23 qui sera donc ici poreux compte tenu de la constitution PIV à réaliser, et
- au moins une enveloppe extérieure 37 fermée qui contient les premier et second éléments et est constituée d'au moins une feuille 49 flexible ou déformable et étanche au matériau MCP, avec :
   -- a) soit ladite feuille flexible 49 qui est en outre scellable (thermiquement/chimiquement, en 49a,49b autour de la poche) et étanche au matériau poreux 23 et à l'air (voire aussi à l'eau), de sorte qu'un vide d'air régnant dans l'enveloppe 37, un dit panneau isolant sous vide (PIV) est ainsi défini, comme montré figure 8,
   -- b) soit le second élément isolant thermique 23 contenu à l'intérieur d'une seconde enveloppe fermée 51 à feuille flexible 53 scellable et étanche au matériau poreux et à l'air (voire aussi à l'eau), de sorte qu'un vide d'air régnant dans la seconde enveloppe, un dit panneau isolant sous vide (PIV) est ainsi défini, comme montré figure 9.

A noter que deux couches 15 contenant un ou plusieurs matériaux MCP pourraient (come figures 12,13) être disposées de part et d'autre de la couche de matériau poreux 23, voire aucune telle couche, si elle prévue uniquement dans la paroi 15, comme figure 2.

L'isolant thermique poreux 23 se composera favorablement d'un matériau nano-poreux (à nanostructure, tel poudre de silice ou un aérogel ou son pyrolat, tel un aérogel de silice) confiné donc de préférence dans une feuille flexible 49 ou 53 qui ne laissera passer ni les vapeurs d'eau ni les gaz. Le PIV obtenu sera vidé de son air pour obtenir par exemple une pression de quelques millibars, puis pourra être scellé. Typiquement, la conductivité thermique λ d'un tel PIV sera de 0.004/0.008 W/m.K à pression atmosphérique et à 20°C. L'utilisation de panneaux isolants sous vide devrait permettre d'atteindre une résistance thermique R = 5 m².K/W avec seulement 35 mm d'isolant.

Une possible composition du matériau 23 est la suivante : 80-85 % de dioxyde de silice (SiO2), 15-20 % de carbure de silicium (SiC) et possiblement 5 % d'autres produits (liant/charges). Une épaisseur de 0.4 à 3 cm est possible. Des exemples, pouvant ici s'appliquer, de panneau PIV et de matériau super-isolant sont en outre fournis dans PCT/FR2014/050267 et dans WO2014060906 (matériau poreux), respectivement.

Les solutions présentées ci-avant doivent permettre, dans un volume et poids acceptables notamment par des constructeurs aéronautiques ou automobiles, un stockage rapide d'une énergie thermique disponible au bout d'environ 6-10 minutes, le maintien de cette énergie pendant 12 à 15 heures, avant sa restitution rapide, typiquement quelques minutes (en particulier moins de 2-3mns), par exemple à un moteur lors d'une phase de démarrage à froid.

Les feuilles flexibles 49,53 du panneau PIV pourront typiquement être réalisées sous la forme d'un film multicouche comportant des films polymère (PE et PET) et de l'aluminium sous forme par exemple laminée (feuille d'épaisseur de l'ordre d'une dizaine de micromètre) ou métallisée (dépôt sous vide d'un film de quelques dizaines de nanomètre). Dans le cas b) ci-avant où il y a une double feuille : intérieure 53 et extérieure 49, la feuille 49 pourra par contre n'être donc un simple film polymère, tel un PE de 0.05 à 0.2 mm d'épaisseur, l'objet de cette feuille extérieure 49 pouvant alors n'être que de créer un simple sac pour contenir/réunir ensemble les éléments ou matelas 15 et 23.

A noter aussi que la/chaque enveloppe 37,51 pourra être typiquement formée de deux feuilles disposées de part et d'autre du/desdits éléments à matériau 15 et 23 et réunies ensemble, comme en 49a,49b figure 19.

Quoi qu'il en soit, un avantage de ces feuilles, directement en contact l'une avec l'autre à l'endroit des portions intermédiaires 21, comme illustré, si elles sont plusieurs, (ou de cette feuille si elle est unique) est qu'on pourra tirer parti de leur continuation physique à l'endroit de ces portions 21 pour y créer une zone d'articulation.

Toutefois, l'utilisation simple de cette ou ces feuilles flexibles créera une discontinuité d'isolation thermique entre les deux poches consécutives 19 ainsi réunies.

Dans certains cas, les portions intermédiaires 21 pourraient présenter des surfaces non négligeables d'autant plus gênantes en termes de ponts thermiques ; mais on peut aussi avoir à placer un panneau 50 ou un manchon 47 en appui, par exemple pour le positionner correctement par rapport à son environnement.

D'autant plus dans ces cas, on pourra trouver un intérêt à ce qu'une partie tubulaire (de section circulaire ou pas) définie intérieurement par un enroulement 55 ou une portion renflée 59 soit définie entre deux zones d'articulation 21 (chacune formée par la ou les feuilles flexibles précitées appliquées l'une contre l'autre), chaque zone étant elle-même réunie latéralement d'un côté à la poche 19 concernée, ceci de façon régulière ou non dans la chaîne, comme montré figures 11-13.

Chaque enroulement 55 sera favorablement un isolant thermique en rouleau (blanket en anglais). Un matériau nano-structuré, ou nano-poreux, conviendra particulièrement, tel un aérogel de silice. Il peut par exemple s'agir du produit souple, en rouleau, dénommé Spaceloft^{®}, un isolant SIPA (Super Isolant à Pression Atmosphérique) proposé par la société ISOLProducts avec une conductivité thermique: λ = 0,0044 à 0,021 W/m.K à pression atmosphérique et à 20°C.

Chaque élément 55,59 sera par ailleurs favorablement enveloppé dans la/les feuilles flexibles précitées (pour maintenir une constitution PIV), En complément ou alternative, cette ou ces feuilles flexibles précitées réunissant deux poches 19 successives pourront envelopper, directement ou avec interposition d'une couche MCP 15 (figure 13), un matériau isolant thermique poreux 57 identique à ou différent du matériau isolant thermique 23 des ou de chaque poche(s).

Les enroulements 55 et les portions renflées 59 présenteront favorablement une surface extérieure convexe. Ceci pourra donc notamment permettre un appui contre des surfaces extérieures complémentaires 61 de positionnement formées localement autour de la paroi périphérique 5, ces surfaces 61 étant concaves, donc chacune en forme d'étrier, si les portions 59 et/ou les enroulements 55 enveloppés sont extérieurement convexes, comme schématisé figure 6.

Les surfaces extérieures 61 pourront aussi en particulier se situer à l'endroit de zones d'angles (voir illustration) concaves ou convexes, pour associer alors articulation et fixation mécanique, dans le sens maintien ou positionnement. Des formes convexes sphériques ou cylindriques devraient être utiles.

Tant dans la solution à enroulement(s) 55 que dans celle à portion(s) renflée(s) 59, les portions intermédiaires 21 ne sont totalement ni thermiquement isolantes.

On peut pourtant souhaiter associer les fonctions d'articulation entre poches 19 et d'isolation thermique sans, ou avec peu de, ponts thermiques, étant noté, en relation avec ces questions de positionnement ou fixation mécanique relative, l'intérêt de la solution schématisée dans son principe figure 10.

Figure 10 les portions intermédiaires 21 sont définies par au moins une structure 79 à matériau isolant thermique 81 (de préférence poreux pour être intégré à une structure PIV globale), assurant une continuité d'isolation thermique entre lesdites deux poches. Le matériau 81 pourra être identique au(x) matériau(x) isolant(s) thermique(s) poreux 23,57.

Dans l'exemple de la figure 10, le matériau poreux (ici en forme de plaque) 81 de chaque structure flexible 79 qui s'étend suivant l'épaisseur entre la(les) feuille(s) flexible(s) 49 de l'enveloppe 37, s'interrompt dans le matériau isolant thermique poreux 23 qui remplit les poches 19. Il pourrait toutefois y avoir continuité.

Plus épaisses que les tissus imprégnés, par exemple plus de 2.5 à 3 fois plus épaisses, et par exemple formées en bloc, comme schématisé, les poches 19 à matériau isolant thermique 23 seront typiquement plus rigides que les structures flexibles d'articulation 79.

Pour que le panneau 50 ainsi formé acquière sa constitution PIV, sous vide partiel, on procédera bien sûr à une telle mise sous vide, avec scellement, après que les couches ou plaques de matériaux poreux 23,81 aient été toutes enveloppées par la ou les feuilles étanches flexibles 49.

Pour réaliser les structures 79, on pourra en particulier utiliser un support flexible en maillage polymère de quelques mm d'épaisseur imprégné d'un aérogel 81 organique, par exemple de silice, ou son pyrolat (aérogel pyrolysé, étant précisé que cette alternative de pyrolat s'applique à chaque cas de la présente description où un matériau poreux thermiquement isolant est concerné). Le support flexible sera favorablement formé d'une trame vierge (par exemple un tissé, non tissé organique ou inorganique) tel un polyester ou un polyamide imbibé de particules isolantes d'aérogel coincées entre les fibres, ce qui permettra de conserver une bonne flexibilité.

Pour information, une structure d'isolation présentée ci-avant 47,50 avec pour matériaux cœur des aérogels nano-poreux ou de leur pyrolizat pourra présenter une conductivité thermique inférieure à 10mW.m-1.K-1 pour une pression interne de 2 à 5 à 10⁻³ Pa. La dépression dans les poches, voire les portions 21, pourra être celle habituelle des PIV : 10⁻² à 10⁻³ Pa.

En liaison avec les figures 3,12,13 on notera encore, comme déjà mentionné, qu'il pourra être avantageux que certaines au moins des poches à constitution PIV et/ou des zones de portions intermédiaires contiennent au moins un matériau MCP, ce matériau 15 étant identique à ou différent de celui des éléments 13 à matériau MCP.

S'il n'y a qu'une seule couche de ce matériau 15, elle sera donc favorablement entourée par la couche de matériau 23, à l'endroit des poches 19, et par le matériau 81 si les portions intermédiaires flexibles 21 en sont pourvues. Figures 1,3,7, on a d'ailleurs marqué INT le côté du volume 7 et EXT l'extérieur (environnement hors du stockeur-échangeur 1). De nouveau, à l'abri thermique des poches 19, voire aussi de celui des portions intermédiaires 21, on régulera ainsi les à-coups de production de chaleur à l'intérieur du/des volume(s) 7 via la couche à MCP 15.

Figure 7 ou 10, on pourra encore remarquer en 89a,89b, des moyens de maintien sur elle-même de la bande 50, une fois pliée sur elle-même. On peut imaginer une solution par clip, par bande auto-agrippante, type Velcro (TM), ou autre.

Il est aussi à noter que les poches 19 ne seront pas nécessairement strictement planes. Ainsi, une forme courbe est possible, comme dans l'exemple de la figure 3.

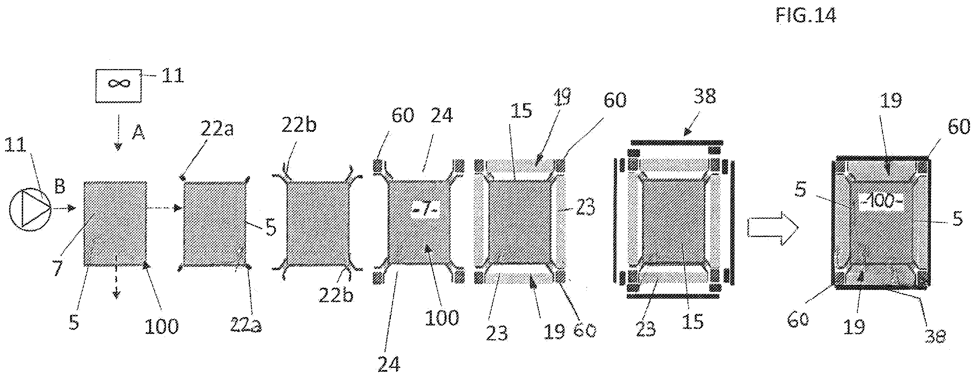

Une application autre que sur une unité de type stockeur-échangeur comme dans le cas de la figure 1 est schématisée figure 14 qui montre le conditionnement latéral extérieur d'un élément 100, qui peut être un échangeur thermique. Sous l'action de moyens 11 de circulation de fluide(s), qui peuvent comprendre une pompe et/ou un ventilateur, un premier fluide frigorigène ou caloporteur A (tel un liquide à refroidir) peut circuler dans le volume interne 7, ici de l'échangeur 100, en échange thermique avec un second fluide B (tel de l'air), les deux fluides ne se mélangeant pas. Les pointillés montrent qu'ils ressortent de l'échangeur, typiquement pour passer dans un circuit externe à l'élément 120 (par exemple un circuit de refroidissement du fluide hydraulique dans un véhicule), à l'image du fluide 9 hors de l'unité 1.

Des excroissances de maintien complémentaires 22a,22b sont fixées avec la paroi latérale périphérique 5 de l'élément 100, de sorte que ces excroissances soient délimitées entre elles, deux à deux, latéralement et donc autour de la paroi périphérique, les espaces ouverts 24 où sont disposés les poches 19 à constitution PIV renfermant chacune au moins un élément isolant thermique poreux 23.

La couche contenant un matériau MCP aura été disposée soit dans une cavité périphérique de la paroi 5, soit autour d'elle ; typiquement dans les poches 19.

Des coins stabilisateurs 60, éventuellement porteur d'un matériau 23 peuvent compléter les excroissances de maintien 22a,22b pour bien stabiliser les poches 19, tout autour de la paroi latérale périphérique 5, et former avec elles les entretoises permettant la mise en place périphérique des poches PIV 19.

Un manchon 38 (en une partie, ou plusieurs comme dans ce cas) s'étend étroitement autour des excroissances et des éléments isolants thermiques 23 à constitution PIV, de façon à maintenir ces derniers dans les espaces 24.

Le rapprochement des premier et dernier schémas de cette figure fera comprendre que, dans la réalité, les circulations des fluides A,B pourront être créés dans des faces autres que celles prévues à gauche sur la figure, par exemple les faces supérieure et inférieure, avec des formes de circuit permettant malgré tout d'obtenir des surfaces d'échange entre lesdits fluides.

Dans la solution de la figure 15, on trouve, à la différence de celle de la figure 1, un stockeur-échangeur 1 dans lequel deux fluides 300,500 peuvent circuler, sans mélange entre eux.

Au milieu de la structure de gestion thermique que l'on va présenter, le stockeur-échangeur 1 est formé d'un empilement suivant une direction A de plaques 310 parallélépipédiques d'échanges et de circulation, croisées d'un étage au suivant, pour définir entre deux étages de plaques 310 des passages internes 700,900 respectivement, pour la circulation d'un fluide 300 puis l'autre, 500, successivement.

Chaque plaque 310 peut être formée de deux plaques ondulées superposées, parallèles, 311,313 entre certaines au moins desquelles est interposé du matériau MCP 320, lui-même en plaque, par exemple.

Les fluides 300,500 vont donc passer, un étage de plaques 310 sur deux, dans les espaces libres 700,900, suivant ici deux directions transversales, chacune perpendiculaire à l'axe A.

Autour de cet empilement se dresse un volume collecteur 163 par face latérale, comme illustré.

Chaque volume collecteur 163, situé face à une ouverture d'extrémité de chaque passage interne 700,900, reçoit le fluide considéré, ici 300 ou 500, à faire passer dans les étages du passage concerné, ou venant d'y passer.

Ainsi, chaque série d'étages de passages 700 (respectivement 900) communique en amont (par rapport au sens de circulation du fluide considéré) avec un premier volume collecteur 163 et, en aval, avec un second volume collecteur 163 situé en face latérale opposée.

Extérieurement, chaque volume collecteur 163 est limité par une paroi latérale 165.

Chaque paroi latérale 165 sera de préférence traversée en 167 par une ouverture communiquant donc avec un volume collecteur 163, pour le raccordement à un conduit 169 d'alimentation ou d'évacuation de fluide 300 ou 500.

Chaque paroi latérale 165 contiendra par ailleurs de préférence un matériau isolant thermique 171.

Entre deux faces latérales adjacentes, telles que 165a,165b, les volumes collecteurs 163 sont fluidiquement isolés entre eux.

Pour cela, chaque l'assemblage de première et deuxième plaques 311,313 comporte une languette débordante 175, dans chaque angle latéral. Pour faciliter cela, ces plaques pourront être métalliques, emboutissables et soudables.

Les languettes 175 pourront former utilement, dans chaque angle, une arête parallèle à la direction d'empilement A, ici la verticale. Pour obtenir l'échangeur/stockeur multi-étages 1, il suffira donc de superposer les plaques 311,313 soudées entre elles le long par exemple de bords retournés et des arêtes verticales. On obtiendra ainsi une alternance de passages libres 700,900, croisés les uns par rapport aux autres et fermés sur deux côtés opposés.

La réalisation finale du bloc passera ensuite par une interface avec les parois latérales 165, pour l'étanchéité périphérique, et donc l'isolation entre les volumes collecteurs 163.

Plutôt qu'un engagement direct avec ces parois, il est ici proposé que les lignes axiales (ici donc verticales) de languettes 175 fixées entre elles s'engagent entre deux coins verticaux 178, par exemple chanfreinés, de cadres intermédiaires 177.

Les cadres intermédiaires 177 seront alors interposés, latéralement, entre la pile de plaques 310 et la paroi latérale 165 en regard.

Dans les angles latéraux, des piliers ou montants 179 se dressent axialement entre deux parois latérales 165 adjacentes, ou, comme dans l'exemple illustré, entre deux cadres intermédiaires 177 latéraux adjacents, le tout étant alors recouvert par les parois latérales 165.

Des moyens de fixation, tels que des vis 173, pourront solidariser le tout, en prise ici dans les parois latérales 165 et les piliers d'angle 179.

Transversalement à l'axe A, ici dessus et dessous, des plaques 181 de couvercle, pleines, participent à la fermeture, de préférence donc étanche et isolée thermiquement, des volumes collecteur 163. Comme les parois 165, les plaques 181 contiennent chacune de préférence un matériau isolant thermique 171.

De fait, il est conseillé que (de préférence toutes) ces parois 165 et plaques 181 soient à structure ou poche PIV (voir pointillés plaque 181 supérieure), donc étanches à l'air. Ainsi, leurs volumes intérieurs contenant le(s) isolant(s) thermique(s) 171 seront sous l'atmosphère contrôlée créée par exemple du fait d'un soudage périphérique d'une enveloppe plastique ou métallique contenant ce(s) isolant(s) thermique(s) 171. Les passages pour les conduits 169 et vis 173 seront alors étanches ou extérieures aux poches.

Les piliers 179 pourront ne pas être à structure PIV.

Avec les pattes 175 saillantes, ces piliers 179 vont donc définir lesdites excroissances ou entretoises 22 avec lesquelles les piliers sont ici engagés, via des fentes 117, donc par coopération de formes.

Le tout assemblé et fixé, on obtient le boîtier 183 opérationnel en tant qu'échangeur/stockeur thermiquement performant avec donc une circulation interne de fluides. Un avantage de la solution PIV sera de limiter l'épaisseur d'isolant 171, d'autant plus si on utilise un isolant poreux, tel un aérogel, et donc d'augmenter soit le volume interne du boîtier disponible pour l'échangeur soit le volume hors tout du boîtier. Une meilleure isolation et/ou une limitation du poids peuvent aussi être attendues. Encore autour, on pourra trouver une enveloppe ou boîte mécaniquement protectrice 350.

La figure 16 montre une solution d'isolation thermique périphérique d'un (ou plusieurs) élément(s) interne(s) 600, par exemple une batterie de production électrique d'automobile où des parois (contenant du MCP) intermédiaires entre des cellules de cette batterie permettent en partie d'en contrôler la température.

Autour de l'élément 600 peut se trouver une première enveloppe formée d'un assemblage, par exemple soudé, de plaques 550. Peut ainsi être définie une boîte plastique ou métallique fermée. Une autre telle boîte, ici fermée, 610, peut être formée en périphérie extérieure, définie par un assemblage, par exemple soudé, de plaques 570.

Entre la boîte extérieure définie par l'assemblage des plaques 570 et l'élément interne 600, et même dans l'exemple la boîte intérieure, ici fermée, formée par l'assemblage des plaques 550, sont interposés desdits éléments isolants thermiques à constitution PIV (ci-après 750a,750b,750c,790), ceci donc autour de la paroi périphérique formée soit par l'extérieur de l'élément 600 ou par la boîte à plaques 550.

La forme des fentes différencie les éléments ou plaques 750a,750b,750c.

Le manchon 38 de la figure 1 est ici défini par la boîte extérieure à plaques 570. Et les entretoises qui établissent ledit espace ouvert où sont disposés lesdits éléments isolants thermiques à constitution PIV (ci-après 750a,750b,750c,790 sont les blocs ou piliers 750a,750b,750c.

Dans l'exemple, lesdits éléments isolants thermiques à constitution PIV sont définis par des panneaux PIV chacun à enveloppe métallique étanche renfermant, sous atmosphère contrôlée, un isolant thermique poreux.

Sur leurs tranches et dans leurs plans respectifs, ces panneaux PIV présentent des saillies 111,113 adaptées à être engagées avec des rainures complémentaires, respectivement 115,117, formées dans des faces longitudinales des blocs ou piliers 750a,750b,750c.

Les blocs ou piliers 750a... définissent ici des blocs d'angle pour le parallélépipède créé.

Ainsi, sur chacune de ses quatre tranches, chaque panneau PIV 750a...,790 est dans son plan engagé avec quatre blocs ou piliers 750a....

Inter-engagé, le tout s'auto-coince et est autoportant, d'autant que
Avec des rainures 115,117 borgnes, les blocs d'extrémité 75a,75b..., formeront isolant thermique comme les panneaux PIV, en bloquant alors le chemin des ponts thermiques. En effet, leur réalisation en bloc unitaire, sans séparation de cheminement pour les ponts thermiques, avec des fonds de rainures 115,117 de blocage où aboutissent les chemins des ponts thermiques des panneaux, dans le plan des panneaux, renforcera l'isolation thermique attendue.

Parallélépipédiques en section, ces blocs d'extrémité pourront présenter chacun, sur deux faces autres que celles rainurées, des parois pleines adaptées à recevoir, intérieurement et extérieurement, l'appui des plaques latérales 550,570. Ainsi, chaque panneau 750a..,790 pourra être serré entre ces deux parois latérales fixées avec les blocs d'extrémité.

Une fixation par une couche de colle 77 ou des vis par exemple est possible.

Les figures 17,18 sont des alternatives proches de la solution de la figure 15.

Figure 17, dans les angles, les piliers ou montants 179 présentent chacun une fente 185 d'angle ouverte latéralement parallèlement à l'axe A et engagées chacune avec une forme en queue d'aronde 1750 de la patte saillante 175 correspondante. Sur la figure, la flèche montre l'engagement axial d'une forme 1750 dans la fente 185 d'un pilier 179

Figure 18, dans les angles, les pattes saillantes 175 se prolongent latéralement par des cornières verticales 1751 ouverte vers l'extérieur, monoblocs ou fixées à elles, et qui reçoivent chacune, dans leur ouverture en « V », un dit pilier ou montant parallélépipédique 179 à fixer à cette cornière. Par une patte double 1753a,1753b formant une fente verticale s'étendant à l'opposé de l'ouverture de la cornière, chacune de ces dernières peut elle-même s'engager autour et le long de la patte 175 considérée.

## Revendications

1. Ensemble comprenant :
- au moins une structure pourvue d'une paroi périphérique (5) et présentant au moins un volume intérieur (7) où est présent l'un au moins parmi :
-- un fluide (9) frigorigène ou caloporteur pouvant circuler dans ledit volume sous l'action de moyens de circulation,
-- des éléments (13,130) de stockage et de restitution d'une énergie thermique,
-- au moins un élément (9,100) à maintenir à une certaine température, et/ou
-- au moins un élément (9) dégageant de la chaleur,
- des éléments (23) isolants thermiques sous vide d'air et disposés autour de ladite paroi périphérique,
- certaines au moins parmi des excroissances et des entretoises de maintien (22), maintenues vis-à-vis de la paroi périphérique, deux excroissances ou entretoises délimitant entre elles, latéralement et autour de la paroi périphérique, un espace ouvert (24) où sont disposés les éléments (23) isolants thermiques sous vide d'air, et
- un manchon (38) s'étendant autour des excroissances, ou entretoises, et des éléments isolants thermiques, de façon à maintenir ces derniers dans lesdits espaces ouverts s'étendant entre le manchon et ladite paroi périphérique,
**caractérisé en ce que** :
- les éléments (23) isolants thermiques sont contenus dans des structures (19) sous vide d'air, lesquelles sont disposées dans lesdits espaces ouverts (24) et s'étendent autour de ladite paroi périphérique, et,
- lesdites certaines au moins parmi les excroissances et les entretoises de maintien (22) sont individuellement en plusieurs parties comprenant :
-- une première partie (22a) de fixation solidaire de la paroi périphérique (5), et
-- une seconde partie (22b) amovible fixée avec la première partie (22a ) de fixation par des coopérations de formes entre elles.

2. Ensemble selon la revendication 1, définissant une unité de stockage et de restitution d'une énergie thermique comprenant :
- une pluralité de modules (3) comprenant chacun une dite structure avec sa dite paroi périphérique et son dit volume intérieur, chaque structure comprenant :
-- lesdits éléments (13,130) de stockage et de restitution de ladite énergie thermique, qui sont des structures individualisées disposées en vrac dans lesdits volumes intérieurs (7) et qui comprennent au moins un matériau à changement de phase,
-- un corps comportant :
--- un dit volume intérieur (7) de réception des éléments de stockage et de restitution de ladite énergie thermique, le volume intérieur étant défini à l'intérieur de ladite paroi périphérique du module et fermé d'un côté par un fond (29), tandis qu'il est ouvert sur un autre côté (31) pour y placer ou en retirer lesdits éléments de stockage et de restitution de ladite énergie thermique,
--- au moins un passage (30) de communication entre l'extérieur du corps et le volume intérieur, pour une entrée et une sortie de fluide frigorigène ou caloporteur,
- et des moyens de fixation (40) adaptés pour, avec au moins deux dits corps, venir en prise avec eux afin d'assurer une fixation étanche au fluide entre modules placés en contact et en regard.

3. Ensemble selon la revendication 1, où les excroissances ou entretoises (22) sont maintenues par des coopérations de formes avec la paroi périphérique (5).

4. Ensemble selon la revendication 2, où les modules (3) présentent des angles et les premières parties des excroissances ou entretoises (22) comprennent des baguettes s'étendant dans les angles.

5. Ensemble selon l'une des revendications précédentes, qui comprend en outre au moins une couche (15) contenant un matériau à changement de phase :
- disposée dans au moins une cavité (17) de la paroi périphérique ou autour de ladite paroi périphérique (5),
- et autour de laquelle sont disposés lesdits éléments (23) isolants thermiques contenus dans des poches (19) sous vide d'air partiel formées par lesdites structures (19) sous vide d'air.

## Patentansprüche

1. Anordnung, enthaltend:
- zumindest eine Struktur, die mit einer Umfangswand (5) versehen ist und zumindest ein Innenvolumen (7) aufweist, in dem zumindest eines aus
-- einem Kälte- oder Wärmeträgerfluid (9), das in diesem Volumen unter der Wirkung von Zirkulationsmitteln zirkulieren kann,
-- Elementen (13, 130) zur Speicherung und Rückgewinnung von thermischer Energie,
-- zumindest einem Element (9, 100), das auf einer bestimmten Temperatur gehalten werden soll,
und/oder
-- zumindest einem Element (9), das Wärme abgibt,
angeordnet ist,
- wärmeisolierende Elemente (23) unter Luftabschluss, die um die Umfangswand herum angeordnet sind,
- zumindest einige Haltevorsprünge und -streben (22), die gegenüber der Umfangswand gehalten werden, wobei zwei Vorsprünge oder Streben seitlich und um die Umfangswand herum einen offenen Raum (24) zwischen sich begrenzen, in dem die wärmeisolierenden Elemente (23) unter Luftabschluss angeordnet sind, und
- eine Hülse (38), die sich um die Vorsprünge oder Streben und die wärmeisolierenden Elemente herum erstreckt, um diese in den sich zwischen der Hülse und der Umfangswand erstreckenden offenen Räumen zu halten,
**dadurch gekennzeichnet, dass**
- die wärmeisolierenden Elemente (23) in Strukturen (19) unter Luftabschluss enthalten sind, die in den offenen Räumen (24) angeordnet sind und sich um die Umfangswand herum erstrecken, und
- die zumindest einige Haltevorsprünge und -streben (22) einzeln mehrteilig ausgeführt sind und enthalten:
-- ein erstes Befestigungsteil (22a) zur festen Verbindung mit der Umfangswand (5), und
-- ein zweites Befestigungsteil (22b), das durch Formschluss lösbar mit dem ersten Befestigungsteil (22a) verbunden ist.

2. Anordnung nach Anspruch 1, die eine Einheit zur Speicherung und Rückgewinnung von thermischer Energie definiert, umfassend:
- eine Vielzahl von Modulen (3), die jeweils eine Struktur mit ihrer Umfangswand und ihrem Innenvolumen umfassen, wobei jede Struktur umfasst:
-- die Elemente (13, 130) zur Speicherung und Rückgewinnung von thermischer Energie, die lose in den Innenvolumen (7) angeordnete, vereinzelte Strukturen sind und zumindest ein Phasenwechselmaterial enthalten,
-- einen Körper, enthaltend:
--- ein Innenvolumen (7) zum Aufnehmen der Elemente zur Speicherung und Rückgewinnung von thermischer Energie, wobei das Innenvolumen innerhalb der Umfangswand des Moduls definiert und auf einer Seite mit einem Boden (29) verschlossen ist, während es auf einer anderen Seite (31) offen ist, um die Elemente zur Speicherung und Rückgewinnung von thermischer Energie darin anzuordnen oder daraus zu entnehmen,
--- zumindest einen Verbindungsdurchgang (30) zwischen der Außenseite des Körpers und dem Innenvolumen für ein Einströmen und Ausströmen von Kälte- oder Wärmeträgerfluid,
- und Befestigungsmittel (40), die dazu geeignet sind, mit zumindest zwei Körper in Eingriff zu gelangen, um eine fluiddichte Befestigung zwischen aneinander anliegend und gegenüberliegend angeordneten Modulen sicherzustellen.

3. Anordnung nach Anspruch 1,
wobei die Vorsprünge oder Streben (22) durch Formschluss mit der Umfangswand (5) gehalten werden.

4. Anordnung nach Anspruch 2,
wobei die Module (3) Ecken aufweisen und die ersten Teile der Vorsprünge oder Streben (22) in den Ecken verlaufende Stege umfassen.

5. Anordnung nach einem der vorangehenden Ansprüche, ferner enthaltend zumindest eine Schicht (15), die ein Phasenwechselmaterial enthält und
- in zumindest einem Hohlraum (17) der Umfangswand oder um die Umfangswand (5) herum angeordnet ist,
- und um die herum die wärmeisolierenden Elemente (23) angeordnet sind, die in Taschen (19) unter partiellem Luftabschluss enthalten sind, die aus den Strukturen (19) unter Luftabschluss gebildet sind.

## Claims

1. Assembly comprising :
- at least one structure provided with a peripheral wall (5) and having at least one interior volume (7) in which there is at least one of the following:
-- a refrigerant fluid or a heat transfer fluid (9) capable of circulating in said volume under the action of circulation means,
-- elements (13, 130) for storing and releasing a thermal energy,
-- at least one element (9, 100) to be maintained at a certain temperature, and/or
-- at least one element (9) releasing heat,
- thermally insulating elements (23) under vacuum and arranged around said peripheral wall,
- at least some amongst retaining protrusions and retaining spacers (22), held opposite the peripheral wall, two protrusions or spacers defining between one another, laterally and around the peripheral wall, an open space (24) in which the thermally insulating elements (23) under vacuum are installed, and
- a sleeve (38) extending around the protrusions or spacers, and around the thermally insulating elements, so as to retain the latter in said open spaces extending between the sleeve and said peripheral wall,
**characterized in that**:
- the thermally insulating elements (23) are contained in structures (19) under vacuum, which are arranged in said open spaces (24) and extend around said peripheral wall, and
- said at least some protrusions and retaining spacers (22) individually consist of several parts comprising:
-- a first part (22a) for integrally fastening the peripheral wall (5), and
-- a second removable part (22b) engaged with the first fastening part (22a; 111; 175, 1750) by cooperating shapes.

2. The assembly of claim 1, defining a unit for storing and releasing thermal energy comprising:
- a plurality of modules (3) each comprising a said structure with its said peripheral wall and its said interior volume, each structure comprising:
-- said elements (13, 130) for storing and releasing said thermal energy, which are individualised structures arranged in bulk in said interior volumes and including at least one phase change material,
-- a body comprising:
--- a said interior volume (7) intended to receive elements for storing and releasing said thermal energy, the interior volume being defined within said peripheral wall of the module and closed on one side by a bottom (29), while it is open on another side (31) to be able to place within it or remove therefrom said elements for storing and releasing said thermal energy,
--- at least one connecting passage (30) between the outside of the body and the interior volume, for entry and exit of a refrigerant or heat transfer fluid,
- and fastening means (40) configured for, with at least two said bodies, engaging with same to ensure fluid-tight fastening between modules placed in contact and facing each other.

3. The assembly of claim 1, wherein the protrusions or spacers (22) are held in place with the peripheral wall (5) by cooperating shapes.

4. The assembly of claim 2, wherein the modules (3) have corners and the first parts of the protrusions or spacers (22) comprise rods extending in the corners.

5. The assembly of one of the preceding claims, which further comprises at least one layer (15) containing a phase change material:
- arranged in at least one cavity (17) of the peripheral wall or around said peripheral wall (5),
- and around which are arranged said thermally insulating elements (23) contained in the pockets (19) under partial vacuum formed by said structures (19) under vacuum.
